# EUROPEAN PATENT APPLICATION

(11) **EP 4 393 817 A1**
(43) Date of publication of application: **03.07.2024**
(21) Application number: 22861088.7
(22) Date of filing: 02.08.2022
(51) Int. Cl.: B64C 27/08, B64C 13/18, B64C 39/02, B64D 27/04, B64D 27/10, B64D 27/24

(54) **ENGINE-CARRYING FLIGHT DEVICE**

(30) Priority: 26.08.2021 JP 2021138157
(71) Applicant: Ishikawa Energy Research Co., Ltd., Ota-shi, Gunma 379-2304 (JP)
(72) Inventor: ISHIKAWA Mitsuru, Ota-shi, Gunma 379-2304 (JP); NAGASHIMA Hiroyuki, Ota-shi, Gunma 379-2304 (JP)
(74) Representative: Plasseraud IP
(86) International application number: PCT/JP2022/029685
(87) International publication number: WO 2023/026797

(57) **Abstract**

An engine-carrying flight device capable of stably hovering is provided. The engine-carrying flight device 10 can fly in a hovering state in which an altitude is maintained and in an ascending/descending state in which the altitude is changed. The engine-carrying flight device 10 includes main rotors 14, sub-rotors 15, an engine 26; motors 21; and an arithmetic control unit 25. The main rotors 14 are rotated by drive force received from the engine 26, the sub-rotors 15 are rotated by drive force received from the motors 21, and the arithmetic control unit 25 causes a thrust generated by rotation of the main rotors 14 to be smaller than a thrust necessary for keeping the altitude constant, in the hovering state.

## Description

### TECHNICAL FIELD

The present invention relates to an engine-carrying flight device, and relates particularly to a parallel hybrid engine-carrying flight device that includes a main rotor driven by an engine and a sub-rotor driven by a motor.

### BACKGROUND ART

An unmanned engine-carrying flight device capable of flying in the air is conventionally known. Such an engine-carrying flight device can fly in the air by using thrusts of rotors that rotate about vertical axes.

For example, the field of transport, the field of surveying, the field of imaging, and the like are conceivable as the fields to which such an engine-carrying flight device is applied. When the engine-carrying flight device is applied to such fields, a surveying device or an imaging device is attached to the flight device. Applying the flight device to such fields enables transport, imaging, and surveying to be performed in regions such as a region in which a person cannot enter by causing the flight device to fly in such regions. Inventions relating to such an engine-carrying flight device are described in, for example, Patent Literature 1 and Patent Literature 2.

In a general engine-carrying flight device, the above-mentioned rotors are rotated by electric power supplied from a storage battery mounted in the flight device. However, since a supply amount of energy is not always sufficient in the supply of electric power by the storage battery, an engine-carrying flight device carrying an engine has appeared to achieve continuous flight over a long period. In such an engine-carrying flight device, a power generator is rotated by drive force of the engine, and the rotors are rotationally driven by electric power generated by this power generator.

Since the engine and the power generator are connected in series in a path in which energy is supplied from a power source to rotors, the engine-carrying flight device with such a configuration is also referred to as series drone. Performing imaging and surveying by using such an engine-carrying flight device enables imaging and surveying to be performed over a wide area. For example, Patent Literature 3 describes a flight device carrying an engine. Moreover, a so-called parallel hybrid drone in which a main rotor is mechanically rotated by an engine and a sub-rotor is rotated by a motor is being gradually developed.

### PRIOR ART LITERATURES

### PATENT LITERATURES

Patent Literature 1: Japanese Patent Application Publication No. 2012-51545
Patent Literature 2: Japanese Patent Application Publication No. 2014-240242
Patent Literature 3: Japanese Patent Application Publication No. 2011-251678

### SUMMARY OF THE INVENTION

### PROBLEMS TO BE SOLVED BY THE INVENTION

However, in the hybrid drone with the configuration described above, there is a room for improvement from a viewpoint of performing stable flight.

Specifically, the hybrid drone includes the main rotor that is rotated by drive force of the engine and the sub-rotor that is rotated by drive force of the motor. The main rotor generates a thrust for lifting a device body, and the sub-rotor is mainly used to control the attitude in flight.

Generally, when the hybrid drone hovers, the main rotor generates most of the thrust for maintaining the altitude of the device body constant. However, if the thrust generated by the main rotor is excessively large, the number of revolutions of the sub-rotor becomes extremely low, and there occurs a problem that attitude control of the device body in the hovering state becomes difficult and stable hovering becomes difficult.

The present invention has been made in view of such problems, and an object of the present invention is to provide an engine-carrying flight device capable of stably hovering.

### MEANS FOR SOLVING THE PROBLEMS

An engine-carrying flight device of the present invention is characterized in that the engine-carrying flight device is capable of flying in a hovering state in which an altitude is maintained and in an ascending/descending state in which the altitude is changed, the engine-carrying flight device including: a main rotor; a sub-rotor: an engine; a motor; and an arithmetic control unit, in which the main rotor is rotated by drive force received from the engine, the sub-rotor is rotated by drive force received from the motor, and the arithmetic control unit causes a thrust generated by rotation of the main rotor to be smaller than a thrust necessary for keeping the altitude constant, in the hovering state.

In the engine-carrying flight device of the present invention, the arithmetic control unit causes the thrust generated by the rotation of the main rotor to be equal to or less than 80% of the thrust necessary for keeping the altitude constant, in the hovering state.

In the engine-carrying flight device of the present invention, the arithmetic control unit causes an output value of the sub-rotor to be 30% or more in the hovering state.

In the engine-carrying flight device of the present invention, the arithmetic control unit changes the number of revolutions of the engine to change the number of revolutions of the main rotor in the ascending/descending state.

### EFFECTS OF THE INVENTION

The engine-carrying flight device of the present invention can fly in the hovering state in which the altitude is maintained and in the ascending/descending state in which the altitude is changed, and includes the main rotor, the sub-rotor, the engine, the motor, and the arithmetic control unit, the main rotor is rotated by drive force received from the engine, the sub-rotor is rotated by drive force received from the motor, and the arithmetic control unit causes the thrust generated by the rotation of the main rotor to be smaller than the thrust necessary for keeping the altitude constant, in the hovering state. Accordingly, in the engine-carrying flight device of the present invention, the thrust generated by the rotation of the main rotor is small, and the sub-rotor is thereby responsible for part of the thrust for maintaining the altitude constant in the hovering state. Thus, it is possible to set the number of revolutions of the sub-rotor at or above a certain level and stabilize the attitude control. In other words, a minimum thrust (number of revolutions) necessary for the attitude control by the sub-rotor can be secured.

Moreover, in the engine-carrying flight device of the present invention, the arithmetic control unit causes the thrust generated by the rotation of the main rotor to be equal to or less than 80% of the thrust necessary for keeping the altitude constant, in the hovering state. Accordingly, in the engine-carrying flight device of the present invention, since the sub-rotor is responsible for 20% of the thrust necessary for hovering, the sub-rotor is rotated at the number of revolutions at or above a certain level, and the attitude control can be stably performed.

Furthermore, in the engine-carrying flight device of the present invention, the arithmetic control unit causes the output value of the sub-rotor to be 30% or more in the hovering state. Accordingly, in the engine-carrying flight device of the present invention, setting the output value of the sub-rotor to 30% or more allows the number of revolutions of the sub-rotor to be maintained at a relatively high speed, and can further stabilize the attitude control.

Moreover, in the engine-carrying flight device of the present invention, the arithmetic control unit changes the number of revolutions of the engine to change the number of revolutions of the main rotor in the ascending/descending state. Accordingly, in the engine-carrying flight device of the present invention, since the ascending and descending of the device body is performed by the rotation of the main rotor, the number of revolutions of the sub-rotor does not have to be changed for the ascending and descending, and the attitude control by the sub-rotor can be stably performed also in the ascending/descending state.

### BRIEF DESCRIPTION OF THE DRAWINGS

[Fig. 1] Fig. 1 is a view illustrating an engine-carrying flight device according to an embodiment of the present invention, Fig. 1A is a perspective view illustrating the engine-carrying flight device, and Fig. 1B is a top view.
[Fig. 2] Fig. 2 is a diagram illustrating the engine-carrying flight device according to an embodiment of the present invention, and is a block diagram illustrating a connection configuration of units.
[Fig. 3] Fig. 3 is a diagram illustrating the engine-carrying flight device according to the embodiment of the present invention, and is a flowchart illustrating operations in flight.
[Fig. 4] Fig. 4 is a diagram illustrating the engine-carrying flight device according to the embodiment of the present invention, and is a graph illustrating a change in an output value over time in a hovering state.

### MODE FOR CARRYING OUT THE INVENTION

A configuration of an engine-carrying flight device 10 of the present embodiment is described below with reference to the drawings. In the following description, parts with the same configurations are denoted by the same reference numerals, and repeated description is omitted. Note that, although directions of up, down, front, rear, left, and right are used in the following description, these directions are for convenience of description. Moreover, the engine-carrying flight device 10 is also referred to as drone.

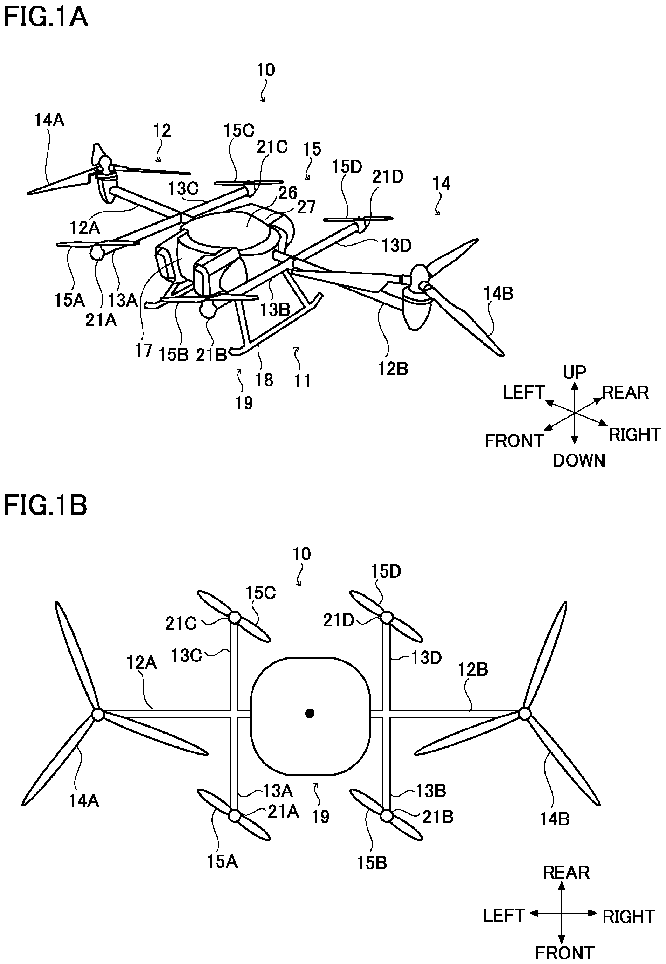

A schematic configuration of the engine-carrying flight device 10 is described with reference to Fig. 1. Fig. 1A is a perspective view illustrating the entire engine-carrying flight device 10. Fig. 1B is a top view of the engine-carrying flight device 10.

With reference to Fig. 1A, the engine-carrying flight device 10 is a parallel hybrid drone. Specifically, a main rotor 14A and the like are drivingly connected to an engine 26 while electric energy is supplied from the engine 26 to a motor 21A and the like that rotate a sub-rotor 15A and the like via a power generator 27 and the like. In the following description, the main rotor 14A and the like are simply referred to as main rotors 14, and the sub-rotor 15A and the like are simply referred to as sub-rotors 15 in some cases.

The engine-carrying flight device 10 mainly includes a frame 11, the engine 26 that is arranged at a substantially-center portion of the frame 11, the power generator 27 that is driven by the engine 26, the sub-rotors 15 that is rotated by the electric power generated by the power generator 27, and the main rotors 14 that is rotated by being drivingly connected to the engine 26.

The frame 11 is formed in a frame shape to support the engine 26, the power generator 27, various wires and control boards (not illustrated herein), and the like. The frame 11 includes a main frame 12A and the like that support the main rotors 14, and a sub-frame 13A and the like that support the sub-rotors 15. A metal or a resin shaped in a substantially-tubular shape is used as the frame 11. Skids 18 that come into contact with the ground when the engine-carrying flight device 10 lands are provided in a lower end portion of the frame 11.

The engine 26, the various wires and control boards (not illustrated herein), and the like are housed in a casing 17. The casing 17 is made of, for example, a synthetic resin plate member shaped in a predetermined shape, and is fixed to a center portion of the frame 11. In this description, the casing 17 and members housed in the casing 17 are referred to as a main body portion 19.

The power generator 27 is arranged near the engine 26. Here, since the power generator 27 is covered with the casing 17, the power generator 27 is not illustrated. The power generator 27 generates electric power by being rotated by the engine 26. The electric power generated by the power generator 27 is supplied to the motors 21 and the like that rotates the sub-rotor 15A and the like. Moreover, the electric power is supplied to control rotation of the sub-rotor 15A and the like.

With reference to Fig. 1B, the main frames 12A and 12B linearly extend in the left-right direction from the main body portion 19. The main frames 12A and 12B are made of a metal or a synthetic resin shaped in a rod shape. The main rotor 14A is arranged in a rotatable state in a left end portion of the main frame 12A extending leftward.

The engine 26 and the main rotors 14 are drivingly connected by a not-illustrated drive link mechanism. Drive force of the engine 26 is transmitted to the main rotors 14 via the drive link mechanism, and the main rotors 14 are thereby rotated. A belt, a gear train, a transmission rod, and the like can be used as the drive link mechanism.

The main rotors 14 mainly have a function of generating a thrust for lifting the engine-carrying flight device 10 into the air. Meanwhile, the sub-rotors 15 is mainly responsible for attitude control of the engine-carrying flight device 10. For example, when the engine-carrying flight device 10 is hovering, the sub-rotors 15 change rotation speeds as appropriate to maintain the position and the attitude of the engine-carrying flight device 10 constant. Moreover, when the engine-carrying flight device 10 moves, the sub-rotors 15 rotate to tilt the engine-carrying flight device 10. Furthermore, the main rotor 14A and the main rotor 14B rotate in directions opposite to each other. Rotating conditions of the main rotors 14 and the sub-rotors 15 are described in detail later.

The sub-frame 13A and the like extend in the front-rear direction, and are made of a metal or a synthetic resin shaped into a rod shape like the main frame 12A and the like described above. The sub-frame 13A and the like extend from middle portions of the main frame 12A and the like. The sub-rotor 15A is arranged in a front end portion of the sub-frame 13A, and is rotated by the motor 21A arranged below the sub-rotor 15A. A sub-rotor 15B is arranged in a front end portion of a sub-frame 13B, and is rotated by a motor 21B arranged below the sub-rotor 15B. A sub-rotor 15C is arranged in a rear end portion of a sub-frame 13C, and is rotated by a motor 21C arranged below the sub-rotor 15C. A sub-rotor 15D is arranged in a rear end portion of a sub-frame 13D, and is rotated by a motor 21D arranged below the sub-rotor 15D. The electric power generated by the power generator 27 is supplied to the motors 21A, 21B, 21C, and 21D. Wires for supplying the electric power to the motor 21A are drawn inside the sub-frame 13A and the like.

When the engine-carrying flight device 10 with the configuration described above flies, the main rotors 14 and the like and the sub-rotor 15A and the like simultaneously rotate. The main rotors 14 and the like generate over half of the thrust for lifting the engine-carrying flight device 10 into the air, and the sub-rotor 15A and the like control the attitude of the engine-carrying flight device 10 in the air by rotating individually. When the engine-carrying flight device 10 moves, the rotation speeds of the sub-rotor 15A and the like are changed with the main rotors 14 and the like rotating at a predetermined speed to execute attitude control of tilting the engine-carrying flight device 10. Such attitude control is described later.

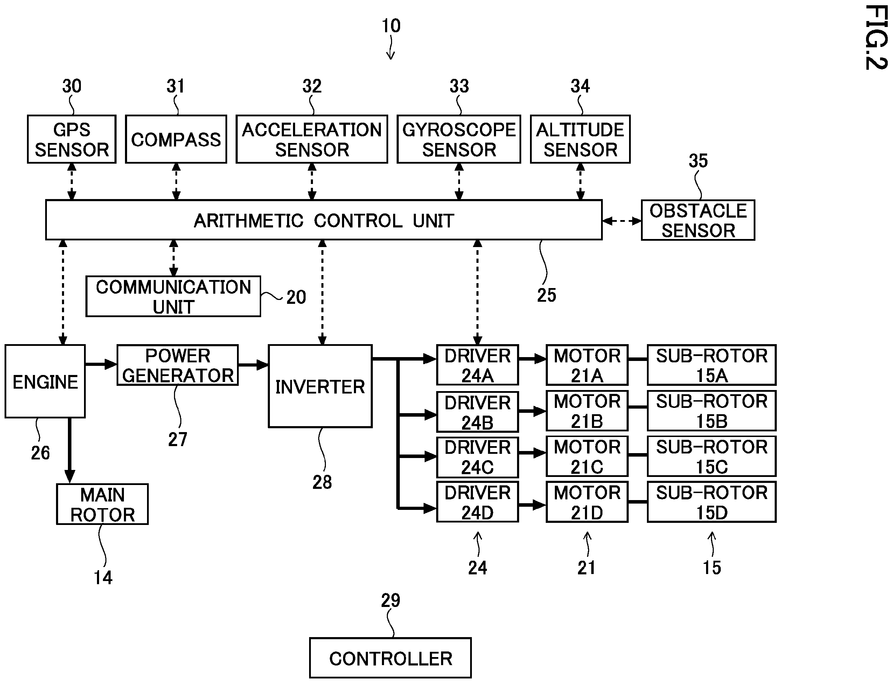

A connection configuration of the engine-carrying flight device 10 is described with refence to a block diagram of Fig. 2.

The engine-carrying flight device 10 includes an arithmetic control unit 25 for controlling the position and the attitude of the engine-carrying flight device 10 in the air. The arithmetic control unit 25 is formed of a CPU, a RAM, a ROM, and the like, and controls rotation of the motor 21A and the like that drive the sub-rotor 15A and the like based on information received from various sensors, a not-illustrated camera, and a controller 29.

The controller 29 is connected to the engine-carrying flight device 10 wirelessly or via a wire, and allows the user to control the position, the altitude, the moving direction, the moving speed, and the like of the engine-carrying flight device 10.

As the aforementioned sensors, the engine-carrying flight device 10 includes, for example, a GPS sensor 30, a compass 31, an acceleration sensor 32, a gyroscope sensor 33, an altitude sensor 34, an obstacle sensor 35, and the like.

The engine-carrying flight device 10 can lift into the air and move in a predetermined direction by using the drive energy generated by the engine 26 to rotate the main rotors 14 and the sub-rotors 15 as described above. Moreover, the control of the position and the attitude in the air is performed by controlling rotation speeds of the motor 21A and the like that rotate the sub-rotor 15A and the like.

The motor 21A and the like use the engine 26 as an energy source. The power generator 27, an inverter 28, and a driver 24A and the like are arranged between the engine 26 and the motor 21A and the like. This configuration converts the drive force generated by the engine 26 to electric power, and the motor 21A and the like are rotated at predetermined rotation speeds by this electric power to perform movement and control of the position and the attitude of the engine-carrying flight device 10. As described later, the sub-rotor 15A and the like are responsible for part of the thrust necessary in hovering of the engine-carrying flight device 10.

The engine 26 is, for example, a reciprocating engine that uses gasoline or the like as a fuel, and drives the power generator 27 with its drive force. Moreover, the engine 26 also mechanically drives the main rotors 14. The arithmetic control unit 25 controls the drive of the engine 26.

AC electric power generated by the power generator 27 is supplied to the inverter 28. In the inverter 28, first, a converter circuit converts the AC electric power to DC electric power, and then an inverter circuit converts the DC electric power to AC power of a predetermined frequency.

The drivers 24A, 24B, 24C, and 24D control amounts of currents to be supplied to the motors 21A, 21B, 21C, and 21D, rotation directions of the motors 21A, 21B, 21C, and 21D, timings of rotation, and the like, respectively, by using the electric power generated by the inverter 28. The arithmetic control unit 25 controls operations of the drivers 24A, 24B, 24C, and 24D.

A communication unit 20 is a unit that performs communication with the controller 29 wirelessly or via a wire. Instructions given from the controller 29 to the engine-carrying flight device 10 pass through the communication unit 20.

A running condition of the engine-carrying flight device 10 varies among a hovering state in which the altitude of the engine-carrying flight device 10 is maintained, an ascending/descending state in which the altitude of the engine-carrying flight device 10 is changed, and a moving state in which a planar position of the engine-carrying flight device 10 is changed.

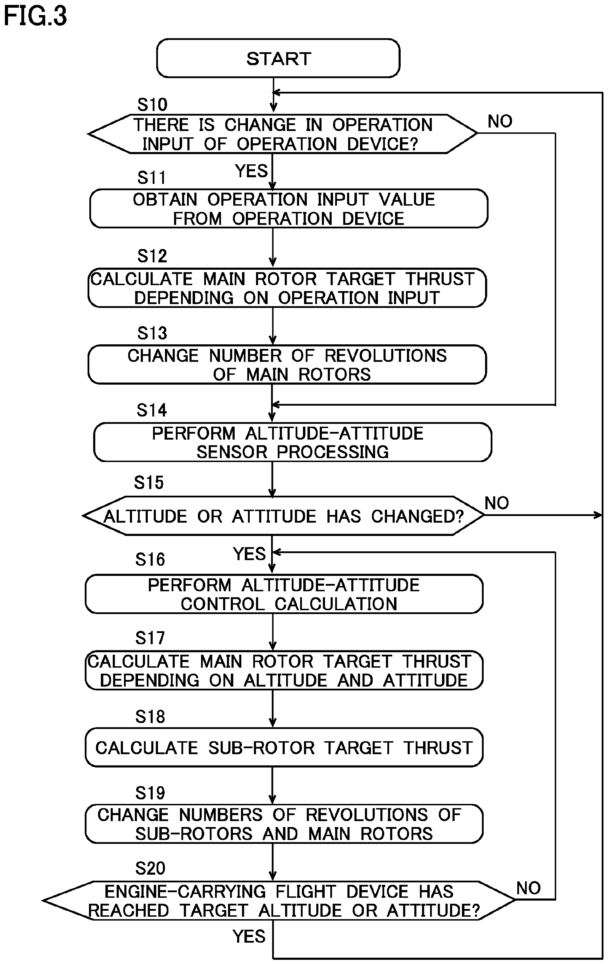

In the hovering state, the arithmetic control unit 25 rotates the main rotors 14 at a substantially constant rotation speed based on an instruction to perform hovering given by the user via the controller 29. Moreover, the arithmetic control unit 25 adjusts thrusts generated from the sub-rotor 15A and the like via the driver 24A and the like based on information that is inputted from the sensors such as the altitude sensor 34 and that indicates the altitude of the engine-carrying flight device 10. Such matters are described later with reference to Fig. 3 and the like.

In the ascending/descending state, the arithmetic control unit 25 gradually increases or reduces the altitude of the engine-carrying flight device 10 based on an instruction to ascend or descend given by the user via the controller 29, while referring also to the altitude of the engine-carrying flight device 10 inputted from the altitude sensor 34 and the like. Details of the ascending/descending state are described later with reference to Fig. 3 and the like.

In the moving state, the arithmetic control unit 25 controls the thrusts of the main rotors 14 and the sub-rotor 15A and the like based on an instruction to move given by the user via the controller 29 such that the engine-carrying flight device 10 moves in a plane. For example, with reference to Fig. 1A, when the engine-carrying flight device 10 is to be moved forward, the arithmetic control unit 25 causes the sub-rotor 15C and the sub-rotor 15D to rotate at a speed higher than that of the sub-rotor 15A and the sub-rotor 15B. Then, the engine-carrying flight device 10 enters a tilted attitude in which the engine-carrying flight device 10 is tilted downward toward a front portion. When the sub-rotors 15 and the main rotors 14 are continuously rotated in this state, the engine-carrying flight device 10 moves forward. In this case, the thrust of the main rotors 14 may be the same as that in the hovering state, or may be reduced or increased to maintain the altitude of the engine-carrying flight device 10.

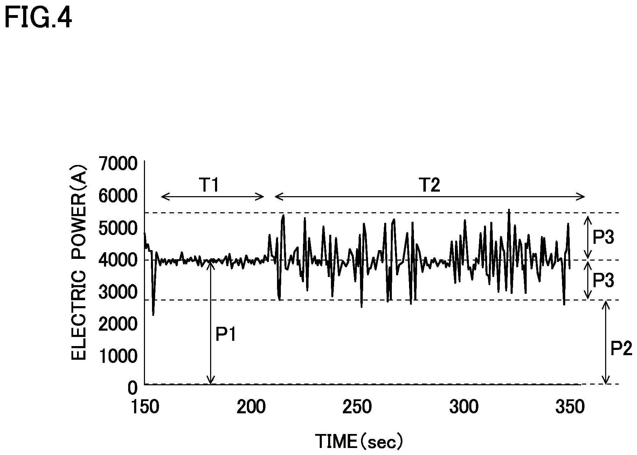

Operations of the engine-carrying flight device 10 are described based on Figs. 3 and 4, with reference also to the drawings described above. Fig. 3 is a flowchart illustrating operations of the engine-carrying flight device 10 in flight. Fig. 4 is a graph illustrating a change in an output value over time in the hovering state of the engine-carrying flight device 10, the horizontal axis represents time, and the vertical axis represents thrust (electric power value in this case).

In step S10, the arithmetic control unit 25 determines whether there is a change in the operation input from the controller 29. Specifically, as described above, since the operation input from the controller 29 to the engine-carrying flight device 10 is one of a hovering operation, a horizontal movement operation, an ascending operation, and a descending operation, the arithmetic control unit 25 determines whether there is a change from one of these operations to the other.

In the case of YES in step S10, the arithmetic control unit 25 transitions to step S11 to change the behavior of the engine-carrying flight device 10.

In the case of NO in step S10, since there is no change in the operation input of the engine-carrying flight device 10, the arithmetic control unit 25 transitions to step S14.

In step S11, the arithmetic control unit 25 obtains an operation input value from the controller 29. Specifically, the arithmetic control unit 25 wirelessly obtains the operation input value via the communication unit 20. For example, the arithmetic control unit 25 obtains information on a degree of horizontal movement, descending, or ascending from the controller 29.

In step S12, the arithmetic control unit 25 calculates a target thrust of the main rotors 14 depending on the operation input value obtained in step S11. As described above, the operation states of the engine-carrying flight device 10 include the hovering operation, the horizontal movement operation, the ascending operation, and the descending operation. Accordingly, changes of the operation input include the following changes.
- A change from the hovering operation to the horizontal movement operation, the ascending operation, or the descending operation.
- A change from the horizontal movement operation to the hovering operation, the ascending operation, or the descending operation.
- A change from the ascending operation to the hovering operation, the horizontal movement operation, or the descending operation.
- A change from the descending operation to the hovering operation, the horizontal movement operation, or the descending operation.

For example, in the case of the change to the ascending operation, the arithmetic control unit 25 performs calculation such that a main rotor target thrust increases. Moreover, in the case of the change to the descending operation, the arithmetic control unit 25 performs calculation such that the main rotor target thrust decreases. Furthermore, in the case of the horizontal movement, the arithmetic control unit 25 performs calculation such that the main rotor target thrust decreases.

In step S13, the arithmetic control unit 25 changes the number of revolutions of the main rotors 14. For example, in the case of the change to the ascending operation, the arithmetic control unit 25 increases the number of revolutions of the main rotors 14. Meanwhile, in the case of the change to the descending operation, the arithmetic control unit 25 reduces the number of revolutions of the main rotors 14.

In step S14, the arithmetic control unit 25 obtains the altitude, the attitude, the speed, and the like of the engine-carrying flight device 10 based on information received from the various sensors mounted in the engine-carrying flight device 10, that is the GPS sensor 30, the compass 31, the acceleration sensor 32, the gyroscope sensor 33, the altitude sensor 34, the obstacle sensor 35, and the like.

In step S15, the arithmetic control unit 25 determines whether the attitude or the altitude of the engine-carrying flight device 10 has changed based on the processing result in step S14.

In the case of YES in step S15, that is when one or both of the attitude and the altitude of the engine-carrying flight device 10 has changed in the result of the processing of step S14, the arithmetic control unit 25 transitions to step S16.

In the case of NO in step S15, that is when the attitude or the altitude of the engine-carrying flight device 10 has not changed in the result of the processing of step S14, the arithmetic control unit 25 returns to step S10.

In step S16, the arithmetic control unit 25 executes calculation for controlling the altitude and the attitude of the engine-carrying flight device 10. Specifically, the arithmetic control unit 25 calculates a thrust target value from one or both of the altitude and the attitude that are targets of the instruction obtained in step S15 and from one or both of the current altitude and the current attitude of the engine-carrying flight device 10 calculated in step S16. For example, the arithmetic control unit 25 calculates a thrust setting value to be set for each motor 21 under assumption that a thrust for changing the altitude and the attitude of the engine-carrying flight device 10 is obtained by using only the sub-rotors 15.

In step S17, the arithmetic control unit 25 calculates a target thrust of the main rotors 14. Specifically, a total value of the thrusts of the respective sub-rotors 15 calculated in step S16 described above is a combined value for maintaining the altitude or controlling the attitude of the engine-carrying flight device 10, and power consumption in this case is denoted by P1. In the present embodiment, P2 being the target thrust of the main rotors 14 is set to be smaller than P1, and P1 is a portion not affected by a change in thrust due to an altitude change or an attitude change. For example, P2 is 3,600 W or less that is 90% of P1 or less, more preferably to 3,200 W or less that is 80% of P1 or less, particularly preferably 2,800 W or less that is 70% of P1 or less.

In step S18, the arithmetic control unit 25 calculates a target thrust of the sub-rotors 15. Specifically, P3 that is the target thrust of the sub-rotors 15 is a portion obtained by subtracting P2 from P1 described above. For example, P3 is 400 W or more that is 10% of P1 or more, more preferably 800 W or more that is 20% of P1 or more, particularly preferably, 1,200 W or more that is 30% of P1 or more.

In step S19, the arithmetic control unit 25 changes the numbers of revolutions of the main rotors 14 and the sub-rotors 15. Specifically, the arithmetic control unit 25 changes the number of revolutions of the main rotors 14 based on the arithmetic result in step S17 described above, and changes the numbers of revolutions of the sub-rotors 15 based on the arithmetic result in step S18 described above.

In step S20, the arithmetic control unit 25 checks whether the engine-carrying flight device 10 has reached the target altitude and attitude, based on the outputs of the respective sensors included in the engine-carrying flight device 10.

In the case of YES in step S20, that is when the engine-carrying flight device 10 has reached the target altitude or attitude, the arithmetic control unit 25 returns to step S10, and waits for an instruction from the controller 29.

In the case of NO in step S20, that is when the engine-carrying flight device 10 has not reached the target altitude or attitude, the arithmetic control unit 25 returns to step S16, and continues the operation of causing the altitude and the attitude of the engine-carrying flight device 10 to be the predetermined altitude and attitude.

The steps described above are continued while the engine-carrying flight device 10 is in flight. Moreover, when the flight of the engine-carrying flight device 10 is to be terminated, the engine-carrying flight device 10 lands on a landing surface based on an instruction of the user made via the controller 29. Furthermore, the arithmetic control unit 25 can determine whether the engine-carrying flight device 10 has reached a plan position being the target.

Fig. 4 is a graph indicating a change in power consumption in the case where the engine-carrying flight device 10 flies, the horizontal axis represents elapsed time, and the vertical axis represents power consumption. Moreover, a period T1 is a period in which the engine-carrying flight device 10 is hovering, and a period T2 is a period in which the engine-carrying flight device 10 is changing its attitude to move, ascend, or descend.

In the period T1, the engine-carrying flight device 10 executes the hovering operation. P1 necessary for the hovering operation is an added-up value of P2 of the main rotors 14 and P3 of the sub-rotors 15 as described above. In the period T1, the altitude of the engine-carrying flight device 10 basically does not change. Accordingly, only the operation for maintaining the altitude is necessary, and P2 is substantially constant while P3 slightly increases or decreases.

In the period T2, the attitude control for forward-tilting or backward-tilting the engine-carrying flight device 10 is performed. Accordingly, P3 greatly increases or decreases. Meanwhile, P2 basically does not change and is constant. In the present embodiment, P2 is set to be small relative to P1, in other words, P3 is set to be large. Thus, the numbers of revolutions of the sub-rotors 15 can be set to a high speed at or above a certain level in the period T2, and the attitude control can be thereby stabilized.

That is the description relating to the operations of the engine-carrying flight device 10.

The above-mentioned present embodiment can provide the following main effects.

According to the engine-carrying flight device 10, the thrust generated by the rotation of the main rotors 14 is small, and the sub-rotors 15 are thereby responsible for part of the thrust for maintaining the altitude constant in the hovering state. Thus, it is possible to set the numbers of revolutions of the sub-rotors 15 at or above a certain level and stabilize the attitude control. In other words, a minimum thrust (number of revolutions) necessary for the attitude control by the sub-rotors can be secured.

Moreover, since the sub-rotors 15 are responsible for 20% of the thrust necessary for the hovering, the sub-rotors 15 is rotated at the numbers of revolutions at or above a certain level, and the attitude control can be stably performed.

Furthermore, setting the output values of the sub-rotors 15 to 30% or more allows the numbers of revolutions of the sub-rotors 15 to be maintained at a relatively high speed and can further stabilize the attitude control.

Moreover, since the ascending and descending of the device body is performed by the rotation of the main rotors 14, the numbers of revolutions of the sub-rotors 15 do not have to be changed for the ascending and descending, and the attitude control by the sub-rotors 15 can be stably performed also in the ascending/descending state.

Although the embodiment of the present invention has been described above, the present invention is not limited to this embodiment, and changes can be made within a scope not departing from the gist of the present invention. Moreover, the modes described above can be combined with one another.

### EXPLANATION OF THE REFERENCE NUMERALS

10 engine-carrying flight device
11 frame
12, 12A, 12B main frame
13A, 13B, 13C, 13D sub-frame
14, 14A, 14B main rotor
15, 15A, 15B, 15C, 15D sub-rotor
17 casing
18 skid
19 main body portion
20 communication unit
21, 21A, 21B, 21C, 21D motor
24, 24A, 24B, 24C, 24D driver
25 arithmetic control unit
26 engine
27 power generator
28 inverter
29 controller
30 GPS sensor
31 compass
32 acceleration sensor
33 gyroscope sensor
34 altitude sensor
35 obstacle sensor

## Claims

1. An engine-carrying flight device capable of flying in a hovering state in which an altitude is maintained and in an ascending/descending state in which the altitude is changed, the engine-carrying flight device comprising:
a main rotor;
a sub-rotor:
an engine;
a motor; and
an arithmetic control unit, wherein
the main rotor is rotated by drive force received from the engine,
the sub-rotor is rotated by drive force received from the motor, and
the arithmetic control unit causes a thrust generated by rotation of the main rotor to be smaller than a thrust necessary for keeping the altitude constant, in the hovering state.

2. The engine-carrying flight device according to claim 1, wherein the arithmetic control unit causes the thrust generated by the rotation of the main rotor to be equal to or less than 80% of the thrust necessary for keeping the altitude constant, in the hovering state.

3. The engine-carrying flight device according to claim 1 or 2, wherein the arithmetic control unit causes an output value of the sub-rotor to be 30% or more in the hovering state.

4. The engine-carrying flight device according to any one of claims 1 to 3, wherein the arithmetic control unit changes the number of revolutions of the engine to change the number of revolutions of the main rotor in the ascending/descending state.
